# FASCICULE DE BREVET EUROPEEN

(11) **EP 0 480 813 B1**
(45) Date de publication et mention de la délivrance du brevet: **02.08.1995**
(21) Numéro de dépôt: 91402676.0
(22) Date de dépôt: 08.10.1991
(51) Int. Cl.: G09G 3/36

(54) **Dispositif de visualisation d'images en couleurs**
Farbbildanzeigevorrichtung
Color image display device

(30) Priorité: 12.10.1990 FR 9012608
(43) Date de publication de la demande: 15.04.1992
(73) Titulaire: THOMSON-CSF, 75008 Paris (FR)
(72) Inventeur: Lehureau, Jean-Claude, F-92402 Courbevoie Cédex (FR); Mourey, Bruno, F-92402 Courbevoie Cédex (FR)
(74) Mandataire: Guérin, Michel

(56) Documents cités:
- EP-A- 0 237 160
- US-A- 3 981 559
- PATENT ABSTRACTS OF JAPAN, vol. 12, no. 406 (P-777)(3253), 27 octobre 1988 & JP-A-63144326
- PATENT ABSTRACTS OF JAPAN, vol. 12, no. 477 (P-800)(3324), 14 décembre 1988 & JP-A-63195624

## Description

L'invention se rapporte à un dispositif de visualisation d'images couleurs et s'applique aussi bien à un dispositif du type à écran de projection que du type à écran à vision directe. L'invention concerne particulièrement des moyens pour améliorer l'efficacité lumineuse en même temps que la résolution de l'image en couleurs, dans les dispositifs de visualisation utilisant un unique écran modulateur spatial de lumière.

L'écran modulateur spatial de lumière comprend généralement un réseau de cellules élémentaires de modulation, correspondant chacune à une surface élémentaire de l'image à former. Les écrans dont les cellules de modulation sont du type utilisant un effet de biréfringence, comme par exemple les cellules à cristaux liquides, ne modulent généralement qu'une composante de polarisation de la lumière, de telle sorte que le fonctionnement d'un dispositif de visualisation d'image utilisant un tel modulateur spatial de lumière exige de sélectionner l'une des deux directions orthogonales de polarisation de la lumière ; d'où il résulte que la direction de polarisation complémentaire n'est pas utilisée.

D'autre part, pour réaliser une image en couleurs avec un écran modulateur spatial du type écran à cristaux liquides (ou en abrégé, écran LCD), les cellules à cristaux liquides sont le plus souvent organisées en triplets chromatiques R-V-B. Chaque triplet comporte une cellule affectée au rouge, une seconde cellule affectée au vert et une troisième cellule affectée au bleu ; ces affectations sont réalisées à l'aide de filtres colorés montés au regard de chaque cellule.

Cette organisation de l'écran LCD en triplets chromatiques se traduit par une perte importante de transparence et donc de lumière, du fait que chaque composante de lumière est absorbée par des filtres colorés sur les deux tiers de la surface de l'écran modulateur. Cette perte de lumière s'ajoute à celle qui est due à la non utilisation de l'une des directions de polarisation.

D'autre part, la résolution d'une image en couleurs ainsi formée n'est qu'un tiers de la résolution d'une image monochrome qui serait obtenue avec le même écran LCD.

L'invention propose une structure nouvelle qui permet d'utiliser et de moduler les deux directions de polarisations orthogonales de la lumière pour réaliser des images en couleurs, tout en présentant une transparence augmentée de 80 % par rapport à l'art antérieur. En outre, la structure de l'invention offre une résolution d'image adaptée à la physiologie de l'oeil, résolution pratiquement identique à celle d'une image monochrome obtenue avec un écran LCD exploitant le même nombre d'éléments images ou cellules.

Suivant l'invention, on propose un dispositif de visualisation d'images en couleurs, comportant une source de lumière produisant un faisceau de lumière blanche dit faisceau primaire, un modulateur spatial de lumière comportant un réseau de n cellules de modulation, caractérisé en ce qu'il comporte des moyens pour polariser la lumière d'une première couleur dans une première direction de polarisation et la lumière d'au moins une autre couleur dans une deuxième direction de polarisation orthogonale à la première, la lumière blanche ainsi polarisée étant envoyée sur le modulateur spatial, le modulateur comportant des moyens pour moduler la lumière reçue dans chaque cellule, la modulation de la lumière polarisée selon la première direction étant indépendante de la modulation de la lumière incidente polarisée selon la deuxième direction.

On notera que le brevet US-A-3 981 559 décrit un dispositif de visualisation monochrome utilisant l'action de deux champs électriques indépendants, l'un pour sélectionner une cellule déterminée, l'autre pour contrôler l'intensité d'excitation du cristal liquide de cette cellule.

Les brevets japonais JP-A-63 195624 et JP-A-63 144326 décrivent des dispositifs de visualisation en couleurs utilisant deux réseaux matriciels de cellules, superposés, avec des mosaïques de polariseurs chromatiques trichromes interposées entre les réseaux.

L'invention sera mieux comprise à la lecture de la description qui suit, faite à titre d'exemple non limitatif en référence aux figures annexées, parmi lesquelles :
- la figure 1 illustre de manière schématique une forme de réalisation préférée d'un dispositif d'affichage d'images en couleurs conforme à l'invention,
- la figure 2 est une vue détaillée d'électrodes montrées sur la figure 1,
- la figure 3 est une vue de face d'un écran de filtrage montré à la figure 1,
- la figure 4 illustre une seconde version de l'invention,
- la figure 5 est une vue de face d'électrodes montrées à la figure 4.

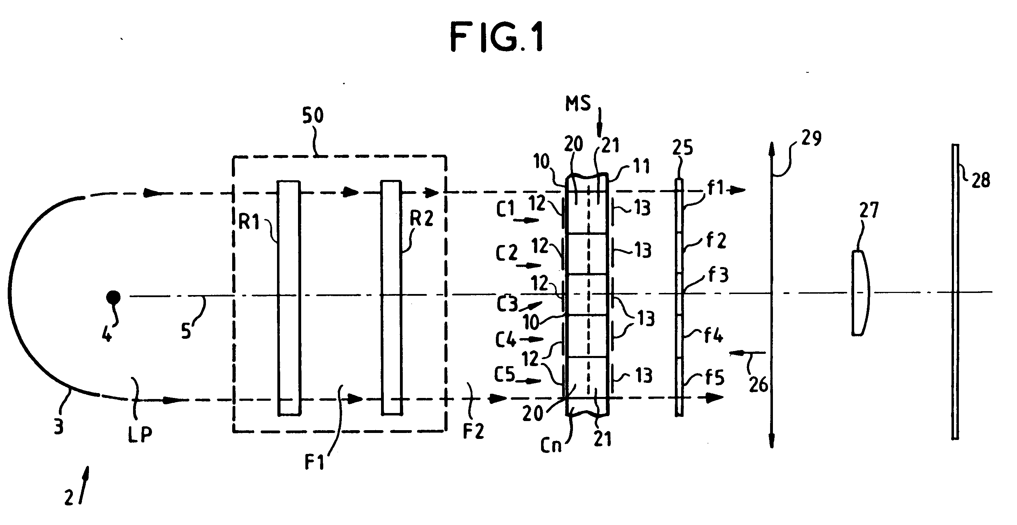

La figure 1 montre schématiquement, à titre d'exemple non limitatif, la structure générale d'un dispositif de visualisation 1 d'images en couleurs, conforme à l'invention.

Le dispositif de visualisation 1 comporte une source lumineuse 2, produisant une lumière blanche 3 n'ayant pas de polarisation particulière, appelée lumière primaire LP.

Dans l'exemple non limitatif décrit la source lumineuse 2 comprend un réflecteur 3 et un élément radiant 4 formé par exemple à l'aide d'un filament incandescent.

Le réflecteur 3 et l'élément radiant 4 sont disposés sur un axe 5 qui constitue l'axe de propagation de la lumière primaire LP. Cette dernière se propage en direction d'un écran modulateur spatial de lumière MS comprenant un réseau matriciel de cellules élémentaires modulatrices destinées à former l'image à réaliser.

L'écran modulateur spatial MS est constitué par exemple, par un écran à cristaux liquides comprenant n cellules à cristaux liquides, disposées de façon conventionnelle en lignes et en colonnes. Pour faciliter la description, sur la figure 1 seulement cinq cellules C1 à C5 sont montrées formant une colonne ; chaque cellule C1 à C5 représente une ligne de cellules, lesquelles lignes de cellules s'étendent perpendiculairement au plan de la figure.

Suivant une caractéristique de l'invention, chaque cellule C1 à C5 peut moduler deux directions orthogonales de polarisation de la lumière, indépendamment l'une de l'autre. Chaque cellule comporte à cet effet une structure nouvelle qui est davantage expliquée dans une suite de la description.

L'une des idées de l'invention est d'attribuer l'une ou l'autre des deux directions de polarisation orthogonales de la lumière, aux différentes longueurs d'onde qui correspondent aux différentes couleurs primaires servant à réaliser l'image colorée ; puis de moduler la luminance de ces couleurs différentes par le biais de la direction de polarisation qu'elles comportent.

Ce principe d'action sur certaines longueurs d'onde en fonction de leur direction de polarisation, peut s'utiliser de manière relativement simple dans le cas où les images sont réalisées à partir de deux couleurs de base ou couleurs primaires. Mais l'utilisation de ce principe exige une légère complexité supplémentaire quand l'image colorée est réalisée à l'aide de trois couleurs primaires, le vert, le rouge et le bleu par exemple, du fait qu'il y a seulement deux directions de polarisation orthogonales pour ces trois couleurs.

Aussi, conformément à l'invention, une première direction de polarisation P est conférée aux longueurs d'onde correspondant à une première couleur primaire, et la direction de polarisation complémentaire S c'est-à-dire orthogonale à la première, est conférée aux longueurs d'onde correspondant aux deux autres couleurs primaires.

Suivant une autre caractéristique de l'invention, la première direction de polarisation P est attribuée aux longueurs d'onde de la couleur verte, et la seconde direction de polarisation S (complémentaire de la première) est attribuée aux deux autres couleurs primaires, à savoir le rouge et le bleu : ces deux types complémentaires de polarisation peuvent être modulés indépendamment l'un de l'autre dans chacune des cellules à cristaux liquides C1 à C5 du modulateur spatial MS.

Suivant une autre caractéristique de l'invention, pour notamment différencier ensuite l'une de l'autre la couleur rouge de la couleur bleue, on associe à chaque cellule à cristaux liquides, soit un premier filtre qui transmet les longueurs d'onde correspondant au vert et au bleu, soit un second filtre qui transmet les longueurs d'onde correspondant au vert et rouge. Ceci est obtenu par exemple à l'aide d'un filtre jaune pour la transmission du vert et du rouge, et à l'aide d'un filtre cyan pour la transmission du vert et du bleu ; les deux types de filtres étant répartis en nombre sensiblement égaux.

L'un et l'autre de ces filtres sont ainsi capables de transmettre le vert, alors que le rouge et le bleu sont transmis seulement par l'un ou par l'autre de ces filtres. Ainsi chaque cellule C1 à C5 à cristaux liquides peut moduler le vert, de telle sorte que la résolution est maximum dans le vert et plus réduite dans le rouge et le bleu. Mais une telle répartition de la résolution est bien adaptée à la physiologie de l'oeil, au point qu'elle est effectivement réalisée dans de nombreuses caméras professionnelles.

Pour conférer aux différentes longueurs d'onde des différentes couleurs la direction de polarisation voulue, un dispositif polariseur chromatique 50 est interposé entre la source lumineuse 2 et le modulateur spatial MS.

Le dispositif polariseur 50 comporte un premier et un second écrans polariseurs R1, R2 centrés sur l'axe de propagation 5.

Dans l'exemple non limitatif décrit, le premier écran polariseur R1 absorbe les longueurs d'onde correspondant au vert et ayant une première direction de polarisation P ; il laisse donc passer en direction du second écran polariseur, un faisceau F1 dans lequel ces composantes relatives au vert et à la première direction de polarisation sont éliminées. Le second écran polariseur R2 absorbe les composantes relatives au bleu et au rouge et ayant la seconde direction de polarisation S, orthogonale à la première.

En conséquence le second écran polariseur R2 laisse passer, en direction du modulateur spatial MS, un faisceau secondaire F2 dans lequel d'une part, les seules longueurs d'onde relatives au vert qui subsistent sont celles affectées de la seconde direction de polarisation S, et dans lequel d'autre part, les seules longueurs d'onde relatives au rouge et au bleu qui subsistent sont celles qui sont affectées de la première direction de polarisation P.

A cette fin, les premier et second écrans polariseurs R1, R2 peuvent être constitués à partir d'un polymère incorporant, d'une façon en elle-même connue, des molécules allongées, absorbantes vis-à-vis de longueurs données. Dans le premier écran polariseur R1, les molécules allongées sont choisies pour absorber le vert ; et elles sont de deux types dans le second écran polariseur, choisis l'un pour absorber le rouge et l'autre pour absorber le bleu. Ces molécules allongées sont orientées dans une seule direction dans chacun des écrans polariseurs R1, R2 et bien entendu ces directions d'orientations sont orthogonales d'un écran polariseur à l'autre de façon à correspondre aux deux directions orthogonales de la polarisation de la lumière.

Dans une première version de l'invention représentée à la figure 1, l'écran modulateur spatial MS est un écran à cristaux liquides, dont les cellules C1 à C5 sont formées à l'aide d'un cristal liquide constitué de molécules absorbantes uniaxes orientées par un nématique. Un cristal liquide d'un tel type est en lui-même classique, il est connu sous le nom anglais de "guest-host". Dans le cas présent, ce cristal liquide est choisi de préférence pour présenter une faible biréfringence de manière à ne pas affecter l'orientation des polarisations incidentes.

Chaque cellule C1 à C5 peut être commandée simultanément par deux types de signaux, destinés chacun à moduler une direction de polarisation P, S. Suivant une caractéristique de l'invention, chaque cellule comporte à cet effet deux jeux d'électrodes appliqués chacun sur une face opposée 10, 11 de la cellule C1 à C5.

Sur la figure 1, les cellules C1 à C5 sont montrées suivant leur épaisseur qui est parallèle à l'axe de propagation 5 de la lumière, et les faces 10, 11 de ces cellules s'étendent perpendiculairement au plan de la figure. Dans l'exemple non limitatif, chaque première face 10 de chaque cellule C1 à C5 comporte un premier jeu d'électrodes 12 destiné à moduler la première direction de polarisation P, et chaque seconde face 11 comporte un second jeu d'électrodes 13 destiné à moduler la seconde direction de polarisation S.

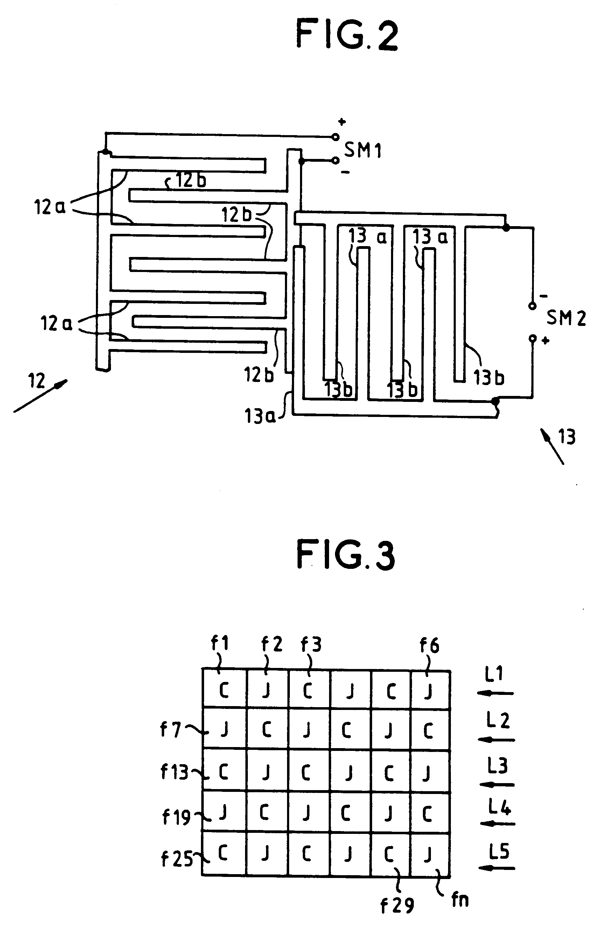

La figure 2 montre les premier et second jeux d'électrodes 12, 13 d'une même cellule C1 à C5 par une vue sensiblement de face, afin de montrer les positions relatives des différentes électrodes.

Chaque jeu 12, 13 est constitué de deux réseaux d'électrodes interdigitées qui s'étendent suivant des directions perpendiculaires d'un jeu d'électrodes à l'autre. Le premier jeu d'électrodes 12 comprend, d'une part un premier réseau d'électrodes formées d'électrodes 12a parallèles, électriquement reliées entre elles ; il comprend d'autre part un second réseau d'électrodes 12b parallèles et reliées entre elles, et qui sont intercalées entre les électrodes 12a du premier réseau.

Le second jeu d'électrodes 13 est constitué d'une manière semblable, à l'aide d'une part d'un premier réseau d'électrodes 13a parallèles et électriquement reliées entre elles, et d'autre part, à l'aide d'un second réseau d'électrodes 13b parallèles et reliées électriquement entre elles, et qui sont intercalées entre les électrodes 13a du premier réseau.

Les électrodes 12a, 12b du premier jeu 12 s'étendent dans des directions perpendiculaires à celles des électrodes 13a, 13b du second jeu 13, de manière à permettre avec ces deux jeux d'électrodes d'agir sur les deux directions de polarisation P,S orthogonales. Les électrodes 12a, 12b du premier jeu reçoivent un premier signal de modulation SM1, dont l'une des polarités "+" est appliquée par exemple aux électrodes 12a du premier réseau, et dont l'autre polarité "-" est appliquée aux électrodes 12b du second réseau. Il en est de même pour les électrodes du second jeu 13 qui reçoivent un second signal de modulation SM2, dont l'une des polarités "+" est appliquée par exemple aux électrodes 13a du premier réseau et dont l'autre polarité "-" est appliquée aux électrodes 13b du second réseau.

Les deux signaux de modulations SM1, SM2 sont des signaux de tension dont la valeur est comprise entre zéro et une valeur maximum : à la valeur zéro, les molécules du cristal liquide ont l'orientation qui leur est conférée par les parois ; à la valeur maximum, le champ électrique est maximum entre les électrodes des deux réseaux différents appartenant à un même jeu 12, 13 d'électrodes, et les molécules sont alors orientées suivant ce champ électrique.

En référence à nouveau à la figure 1, ceci conduit d'une certaine manière à partager chaque cellule C1 à C5 en deux parties dans le sens de son épaisseur. Une première partie 20 proche de la première face et du premier jeu 12 d'électrode est prévue par exemple pour moduler la première direction de polarisation P ; et la seconde partie 21 de chaque cellule, proche de la seconde face et du second jeu 13 d'électrodes est prévue pour moduler la seconde direction de polarisation S orthogonale à la première.

Dans l'exemple non limitatif décrit, les électrodes 12a, 12b du premier jeu 12 s'étendent perpendiculairement au plan de la figure, horizontalement par exemple ; et les électrodes 13a, 13b du second jeu 13 s'étendent parallèlement au plan de la figure et verticalement. Par suite, l'application d'un signal de modulation SM1 aux électrodes du premier jeu 12, engendre dans la première partie 20 de cellule des lignes de champ (non représentées ) dont l'orientation principale est verticale, alors que l'application du signal de modulation SM2 aux électrodes du second jeu 13, engendre dans la seconde partie 21 des lignes de champ (non représentées) dont l'orientation est principalement perpendiculaire au plan de la figure.

Ainsi l'absorption sélective de l'une ou l'autre des directions orthogonales de polarisation P, S se fait en couchant les molécules sous l'action du champ électrique engendré par l'un ou l'autre des jeux 12, 13 d'électrodes interdigitées. Au contraire l'absorption s'annule lorsque l'orientation est homéotrope (perpendiculaire aux parois ) sous l'effet de l'orientation conférée par les parois ou faces 10, 11 ; ou bien encore sous l'effet d'un champ qui pourrait être développé entre les deux jeux 12, 13 d'électrodes interdigitées.

Dans l'exemple non limitatif de la description, en absorbant la lumière ayant la première direction de polarisation P, on absorbe les composantes relatives au vert, et on absorbe celles relatives au rouge et au bleu en absorbant la seconde direction de polarisation S.

Suivant une caractéristique de l'invention, l'image en couleur peut alors être formée à l'aide d'un écran de filtrage 25, comportant un même nombre n de filtres élémentaires f1 à f5 que le modulateur spatial MS comporte de cellules (C1 à C5) de modulation. A chaque cellule C1 à C5 correspond un filtre élémentaire f1 à f5 : chaque cellule C1 à C5 et le filtre f1 à f5 qui lui est attribué sont intéressés par une même section élémentaire du second faisceau secondaire F2 qui émerge du second écran polariseur R2 et qui se propage en direction du modulateur spatial MS. Ainsi à chaque point élémentaire d'image correspondent une cellule C1 à C5 plus un filtre f1 à f5.

Suivant une autre caractéristique de l'invention, l'écran de filtrage 25 peut être interposé entre le second écran polariseur R2 et le modulateur spatial MS, ou bien être disposé après ce dernier par rapport à la direction de propagation du second faisceau secondaire F2, comme représenté dans l'exemple non limitatif de la figure 1. L'écran de filtrage 25 peut éventuellement être intégré à l'écran à cristaux liquides MS : dans ce cas chaque filtre f1 à f5 peut être constitué par une couche réalisée de façon en elle-même classique sur l'une des parois de l'écran à cristaux liquides MS, directement en vis-à-vis de la cellule C1 à C5 correspondante.

La figure 3 représente schématiquement l'écran de filtrage 25 par une vue de face, suivant la flèche 26 montrée à la figure 1.

L'écran de filtrage 25 comporte n filtres élémentaires f1 à fn, disposés en lignes L1 à L5 et en colonnes et correspondant chacun à une cellules C1 à Cn de modulation de l'écran modulateur spatial MS ; chaque filtre f1 à fn représente un point élémentaire de l'image. Dans l'exemple montré à la figure 3 le nombre n est 30, mais bien entendu ce nombre peut être différent, plus grand ou plus faible.

Les filtres f1 à fn sont partagés en deux types:
- les filtres du premier type sont destinés à laisser passer exclusivement les longueurs d'onde relatives au vert et au rouge ; ce qui peut être obtenu avec un filtre jaune J.
- les filtres du second type sont destinés à laisser passer seulement les composantes relatives au vert et au bleu ; ceci peut être obtenu par exemple avec un filtre cyan C.

Dans l'exemple non limitatif décrit, les filtres élémentaires f1 à f30 sont répartis et disposés de façon que dans le sens des lignes L1 à L6 ou celui des colonnes, un filtre du premier type à savoir jaune J dans l'exemple, succède à un filtre du second type à savoir cyan C dans l'exemple.

Comme il a été expliqué plus haut, ceci permet à chaque cellule de modulation de l'écran modulateur spatial MS de moduler le vert (composante primordiale de la luminance) et/ou une composante complémentaire qui est le rouge ou le bleu, suivant le type de filtre élémentaire f1 à f30 attaché à cette cellule. Connaissant le type de filtre J ou C attaché à chaque cellule de modulation, on détermine l'absorption à réaliser de l'une ou l'autre des directions de polarisation P,S dans chaque cellule de modulation, sachant que le blanc est obtenu à l'aide de deux points élémentaires voisins comportant des filtres f1 à f30 de couleurs J, C différentes : par exemple le premier et le second filtres f1 et f2 disposés dans le sens de la ligne L1 et ayant respectivement la couleur cyan C et jaune J ; ou encore par exemple le septième et le treizième filtre f7, f13 respectivement jaune J et cyan C, qui se succèdent dans le sens d'une colonne.

Le blanc à saturation étant constitué des trois composantes à puissance égale, la transparence maximum théorique d'un couple cellule-filtre d'un point élémentaire d'image est de l'ordre de 60 % . Ceci se compare favorablement à l'agencement classique en triades Rouge-Vert-Bleu qui ne permet que 33 % de transparence.

Pour faire de la projection d'images, il suffit d'ajouter au dispositif de visualisation de l'invention, sur une lentille 29 un objectif de projection 27 et un écran de projection 28, comme représenté sur la figure 1.

Mais il est possible également, à un observateur placé à la place de l'objectif de projection 27, de voir directement l'image colorée soit sur l'écran de filtrage 25, soit sur l'écran modulateur spatial SM si l'écran de filtrage 25 est disposé entre ce dernier et le second écran polariseur R2.

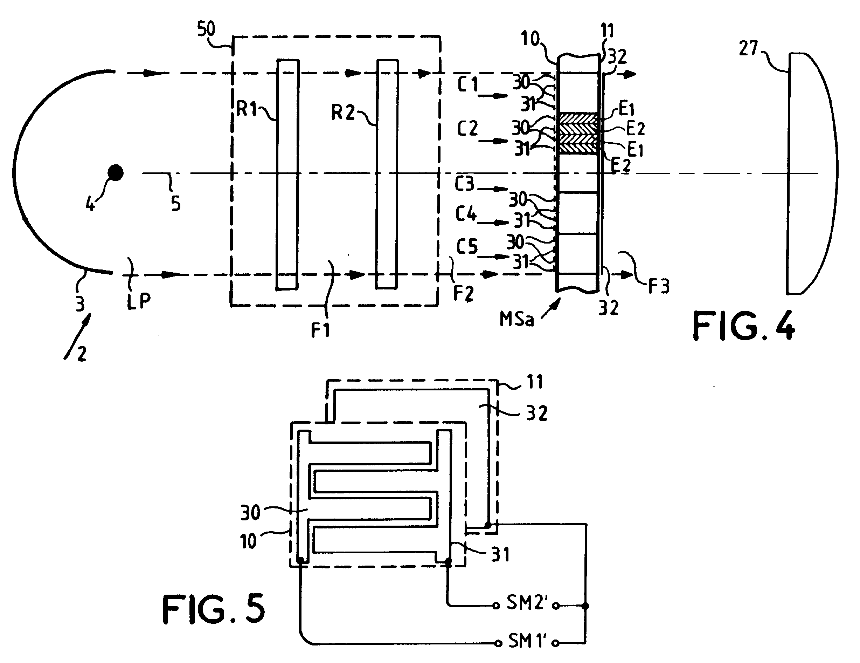

La figure 4 illustre un autre mode de réalisation de l'invention. Dans cette version, l'écran modulateur spatial MSa comporte des cellules de modulation C1 à C5 à cristaux liquides, constituées chacune par une cellule nématique divisée en deux types d'éléments dans lesquels les cristaux sont orientés suivant les deux polarisations orthogonales P, S incidentes. A chaque orientation c'est-à-dire direction de polarisation, correspond un groupe d'électrodes 30 ou 31. Les deux groupes 30, 31 d'électrodes sont disposés sur une même face 10 de chaque cellule C1 à C5 et une électrode commune 32 aux deux groupes 30, 31 est disposée sur la face 11 opposée de chaque cellule C1 à C5.

La figure 5 montre de manière schématique la disposition des deux groupes 30, 31 d'électrodes sur une face 10 de cellule C1 à C5.

En fait chaque ensemble de deux groupes d'électrodes est constitué par deux réseaux d'électrodes interdigitées. Dans chaque réseau ou groupe les électrodes sont électriquement reliées entre elles. Toutes ces électrodes sont parallèles et les électrodes du premier et du second groupes 30, 31 sont intercalées.

Chaque groupe 30, 31 reçoit une polarité d'un signal de modulation respectivement SM1′, SM2′ dont l'autre polarité est appliquée à l'électrode commune 32 située sur la face 11 opposée.

En référence à nouveau à la figure 4, il est ainsi possible pour chaque cellule de modulation C1 à C5 et plus particulièrement dans chacun des types d'éléments de modulation E1, E2, d'établir sous la commande des signaux de modulation SM1′, SM2′, un champ électrique dont les lignes (non représentées) sont établies entre l'électrode commune 32 et les électrodes des groupes 30, 31.

Les éléments de modulation E1 du premier type sont destinés à agir sur des composantes ayant la première direction de polarisation, et les éléments E2 du second type sont destinés à agir sur des composantes ayant la seconde direction de polarisation S.

Dans chaque cellule C1 à C5, les éléments E1, E2 du premier et du second type sont alternés et se succèdent de manière à constituer en quelque sorte des couches parallèles à l'axe de propagation 5, et qui dans l'exemple non limitatif décrit sont perpendiculaires au plan de la figure. Chaque électrode du premier groupe 30 est située en vis à vis d'un élément de modulation E1 du premier type, et chaque électrode du second groupe 31 est située en vis à vis d'un élément de modulation E2 du second type.

Les champs électriques ainsi engendrés dans les éléments de modulation ont pour effet de modifier les chemins optiques, c'est-à-dire la vitesse de propagation (dans ces éléments E1, E2) des composantes ayant, soit la première direction de polarisation P, pour ceux engendrés par le premier groupe d'électrode 30 (dans les éléments E1), soit la seconde direction de polarisation S pour ceux engendrés par le second groupe d'électrode 31 (dans les éléments E2). L'écart de chemin optique dans les éléments de modulation E1, E2 entre leur l'état "activé" imposé par les groupes d'électrodes 30, 31 (l'état activé correspond à l'application du signal SM1′, SM2′), et leur état "non activé", est supérieur ou égal à une demi longueur d'onde.

Il est alors possible en modulant la tension du signal de modulation SM1′, SM2′ appliqué à l'un des groupes d'électrodes 30, 31 c'est-à-dire à l'un des types E1, E2 d'éléments de modulation, de modifier la phase relative des composantes ayant l'une des deux directions orthogonales de polarisation P, S sans affecter la phase des composantes ayant l'autre direction de polarisation.

Il est possible de visualiser de différentes manières en elles-mêmes connues, les différences de phase engendrées par les traversées des éléments du premier ou du second type E1, E2, notamment par strioscopie ; ce qui peut être obtenu par exemple simplement par l'effet de diaphragme lié à l'ouverture de l'objectif de projection 27, objectif de projection en direction duquel se propage le faisceau F3 qui émerge de l'écran modulateur spatial MSa

Entre les deux types E1, E2 d'éléments de modulation, la différence réside dans l'orientation des molécules qu'ils contiennent, ces orientations étant orthogonales d'un type à l'autre. L'orientation orthogonale des molécules d'un type d'élément à l'autre, alors qu'en fait ces deux types alternent dans une même cellule C1 à C5, peut être par exemple conférée par les parois ou faces 10, 11, suivant une pratique en elle-même courante, à la différence que dans le cas présent cette orientation n'est pas la même dans toute la surface de la cellule C1 à C5, c'est-à-dire des faces 10,11.

L'orientation conférée aux molécules des deux types d'éléments est telle que la première polarisation P traverse les éléments E1 du premier type suivant un mode de propagation rapide, dans tous les cas : ceci du fait que dans les éléments E1 du premier type les molécules sont toujours orthogonales à cette première direction de polarisation, aussi bien quand elles sont orientées sous l'influence des parois, que quand elles sont orientées sous l'effet du champ électrique, c'est-à-dire quand les éléments E1 du premier type sont activés.

Cette même première polarisation P traverse les éléments E2 du second type également en mode de propagation rapide quand ces éléments E2 sont activés, mais elle les traverse en mode de propagation lent quand ils ne sont pas activés (champ électrique non établi), c'est-à-dire quand les molécules sont orientées sous l'influence des parois.

En ce qui concerne la seconde polarisation S, elle peut traverser les éléments E1 du premier type suivant un mode de propagation lent quand ces éléments E1 ne sont pas activés (champ électrique non établi), et traverser ces éléments E1 suivant le mode de propagation rapide quand ils sont activés, c'est-à-dire quand l'orientation des molécules résulte de l'établissement du champ électrique. D'autre part, cette même seconde polarisation S traverse les éléments E2 du second type suivant le mode rapide aussi bien dans le cas ou ces éléments sont activés que quand ils ne le sont pas.

Cette version de l'invention peut être utilisée en réflection ou bien en transmission comme dans la figure 4.

## Revendications

1. Dispositif de visualisation d'images en couleurs, comportant une source de lumière (2) produisant un faisceau de lumière blanche (FP) dit faisceau primaire, un modulateur spatial (MS) de lumière comportant un réseau de n cellules de modulation (C1 à C5), caractérisé en ce qu'il comporte des moyens (50) pour polariser la lumière d'une première couleur dans une première direction de polarisation et la lumière d'au moins une autre couleur dans une deuxième direction de polarisation orthogonale à la première, la lumière blanche ainsi polarisée étant envoyée sur le modulateur spatial, le modulateur comportant des moyens (12, 13) pour moduler la lumière reçue dans chaque cellule, la modulation de la lumière polarisée selon la première direction (P) étant indépendante de la modulation de la lumière incidente polarisée selon la deuxième direction (S).

2. Dispositif de visualisation suivant la revendication 1, caractérisé en ce les moyens pour polariser la lumière comportent un dispositif polariseur chromatique (10) interposé sur le trajet du faisceau primaire (FP) entre la source de lumière (2) et le modulateur spatial (MS), le dispositif polariseur chromatique (10) délivrant un faisceau secondaire (F2) dans lequel d'une part, les longueurs d'onde relatives à une première couleur primaire (vert) existent uniquement avec la seconde direction de polarisation (S) et dans lequel d'autre part, les longueurs d'onde relatives à une seconde et une troisième couleurs primaires (Rouge, Bleu) existent uniquement avec la première direction de polarisation (P).

3. Dispositif de visualisation suivant la revendication 2, caractérisé en ce que le dispositif polariseur chromatique (10) comprend un premier et un second écran polariseur (R1,R2) disposés l'un après l'autre, l'un des écrans polariseurs (R1) éliminant les longueurs d'onde correspondant à la première couleur primaire (V) et ayant l'une des deux directions orthogonales de polarisation (S), et l'autre écran polariseur (R2) éliminant les longueurs d'onde correspondant aux seconde et troisième couleurs primaires (R, B) et ayant l'autre des deux directions de polarisation (S).

4. Dispositif de visualisation suivant la revendication 3, caractérisé en ce que les deux écrans polariseurs (R1,R2) comprennent des molécules allongées absorbantes vis-à-vis de longueurs d'onde données, orientées suivant des directions parallèles entre elles dans chacun des écrans polariseurs, ces directions étant perpendiculaires entre les deux écrans polariseurs.

5. Dispositif de visualisation suivant la revendication 2, caractérisé en ce qu'il comporte en outre un écran de filtrage (25) comprenant des filtres élémentaires (f1 à fn) correspondant chacun à une cellule de modulation (C1 à Cn) donnée, chaque filtre étant soit d'un premier type (J) laissant passer des longueurs d'onde relatives à la seconde couleur primaire (Rouge) soit d'un second type laissant passer des longueurs d'onde relatives à la troisième couleur primaire (Bleu), les deux types de filtres laissant en outre passer des longueurs d'onde relatives à la première couleur primaire (Vert).

6. Dispositif de visualisation suivant l'une des revendications 2, ou 3, ou 4, ou 5, caractérisé en ce que la première couleur primaire est le vert, et en ce que les seconde et troisième couleurs primaires sont le rouge et le bleu.

7. Dispositif de visualisation suivant l'une des revendications 5 ou 6, caractérisé en ce que le premier type de filtre élémentaire est Jaune, et en ce que le second type de filtre élémentaire est CYAN.

8. Dispositif de visualisation suivant l'une quelconque des revendications 5 ou 6 ou 7, caractérisé en ce que l'écran de filtrage (25) est situé entre le dispositif polariseur chromatique (10) et l'écran modulateur spatial (MS).

9. Dispositif de visualisation suivant l'une quelconque des revendications 5 ou 6 ou 7, caractérisé en ce que l'écran de filtrage (25) est situé à l'opposé du dispositif polariseur chromatique (10) par rapport à l'écran modulateur spatial (MS).

10. Dispositif de visualisation suivant la revendication 1, caractérisé en ce que les cellules (C1 à C5) modulatrices sont des cellules à cristal liquide.

11. Dispositif de visualisation suivant la revendication 10, caractérisé en ce que le cristal liquide est constitué de molécules absorbantes uniaxes, et en ce que chaque cellule (C1 à C5) comporte un premier et un second jeux (12, 13) d'électrodes indépendants l'un de l'autre, situés sur des faces (10, 11) opposées de chaque cellule, et agissant pour des directions de polarisation orthogonales (P, S).

12. Dispositif de visualisation suivant la revendication 11, caractérisé en ce que chaque jeu (12, 13) est formé par un premier et un second réseaux d'électrodes (12a, 12b et 13a, 13b) auxquels sont appliqués respectivement une première et un seconde polarités (+, -) d'un signal de modulation (SM1, SM2), les électrodes du premier réseau étant intercalés avec les électrodes du second réseau.

13. Dispositif de visualisation suivant la revendication 12, caractérisé en ce que les électrodes (12a, 12b) du premier jeu (12) s'étendent perpendiculairement aux électrodes (13a, 13b) du second jeu (13).

14. Dispositif de visualisation suivant la revendication 10, caractérisé en ce que chaque cellule (C1 à C5) comporte un premier et un second groupes (30, 31) d'électrodes situés sur une première face (10) de la cellule, et comporte sur une seconde face (11) une électrode commune aux deux groupes (30, 31) d'électrodes, les électrodes du premier groupe (30) étant intercalées avec les électrodes du second groupe (31) et en ce que en absence de signaux appliqués aux groupes d'électrodes (30, 31), dans chaque cellule (C1 à Cn) les molécules sont orientées suivant une première ou une seconde direction selon qu'elles sont situées en vis-à-vis d'une électrode du premier ou du second groupe (30,31).

15. Dispositif de visualisation suivant la revendication 14, caractérisé en ce que les première et seconde directions d'orientation des molécules sont orthogonales.

## Patentansprüche

1. Farbbild-Anzeigevorrichtung mit einer Lichtquelle (2), die ein Strahlenbündel (FP) aus weißem Licht, das Primärstrahlenbündel, erzeugt, einem spatialen Lichtmodulator (MS), der eine Matrix aus n Modulationszellen (C1 bis C5) enthält, gekennzeichnet durch Mittel (50) zum Polarisieren des Lichts einer ersten Farbe in einer ersten Polarisationsrichtung und des Lichts wenigstens einer weiteren Farbe in einer zweiten Polarisationsrichtung, die senkrecht zur ersten ist, wobei das auf diese Weise polarisierte weiße Licht auf den spatialen Modulator geschickt wird, wobei der Modulator Mittel (12, 13) zum Modulieren des in jeder Zelle empfangenen Lichts enthält, wobei die Modulation des entsprechend der ersten Richtung (P) polarisierten Lichts unabhängig von der Modulation des einfallenden, gemäß der zweiten Richtung (S) polarisierten Lichts ist.

2. Anzeigevorrichtung nach Anspruch 1, dadurch gekennzeichnet, daß die Mittel zum Polarisieren des Lichts eine chromatische Polarisationsvorrichtung (10) enthält, die in die Bahn des Primärstrahlenbündels (FP) zwischen der Lichtquelle (2) und dem spatialen Modulator (MS) eingefügt ist, wobei die chromatische Polarisationsvorrichtung (10) ein Sekundärstrahlenbündel (F2) liefert, in dem einerseits die Wellenlängen für eine erste Primärfarbe (grün) ausschließlich mit der zweiten Polarisationsrichtung (S) vorhanden sind, und in dem andererseits die Wellenlängen für eine zweite und eine dritte Primärfarbe (rot, blau) ausschließlich mit der ersten Polarisationsrichtung (P) vorhanden sind.

3. Anzeigevorrichtung nach Anspruch 2, dadurch gekennzeichnet, daß die chromatische Polarisationsvorrichtung (10) einen ersten und einen zweiten Polarisationsschirm (R1, R2) enthält, die nacheinander angeordnet sind, wobei einer der Polarisationsschirme (R1) die Wellenlängen eliminiert, die der ersten Primärfarbe (V) entsprechen und eine (S) der zwei orthogonalen Polarisationsrichtungen haben, während der andere Polarisationsschirm (R2) die Wellenlängen eleminiert, die der zweiten und der dritten Primärfarbe (R, P) entsprechen und die andere (S) der zwei Polarisationsrichtungen haben.

4. Vorrichtung nach Anspruch 3, dadurch gekennzeichnet, daß die zwei Polarisationsschirme (R1, R2) für gegebene Wellenlängen absorbierende langgestreckte Moleküle enthalten, die gemäß zueinander parallelen Richtungen in jedem der Polarisationsschirme ausgerichtet sind, wobei diese Richtungen senkrecht zwischen den beiden Polarisationsschirmen verlaufen.

5. Anzeigevorrichtung nach Anspruch 2, dadurch gekennzeichnet, daß sie ferner einen Filterschirm (25) mit Elementarfiltern (f1 bis fn) enthält, die jeweils einer gegebenen Modulationszelle (C1 bis Cn) entsprechen, wobei jedes Filter entweder ein erster Typ (J) ist, der Wellenlängen entsprechend der zweiten Primärfarbe (rot) durchläßt, oder ein zweiter Typ ist, der Wellenlängen entsprechend der dritten Primärfarbe (blau) durchläßt, wobei die zwei Filtertypen außerdem Wellenlängen entsprechend der ersten Primärfarbe (grün) durchlassen.

6. Anzeigevorrichtung nach einem der Ansprüche 2 oder 3 oder 4 oder 5, dadurch gekennzeichnet, daß die erste Primärfarbe grün ist, daß die zweite Primärfarbe rot ist und daß die dritte Primärfarbe blau ist.

7. Anzeigevorrichtung nach einem der Ansprüche 5 oder 6, dadurch gekennzeichnet, daß der erste elementare Filtertyp gelb ist und daß der zweite elementare Filtertyp CYAN ist.

8. Anzeigevorrichtung nach einem der Ansprüche 5 oder 6 oder 7, dadurch gekennzeichnet, daß der Filterschirm (25) zwischen der chromatischen Polarisationsvorrichtung (10) und dem spatialen Modulatorschirm (MS) angebracht ist.

9. Anzeigevorrichtung nach einem der Ansprüche 5 oder 6 oder 7, dadurch gekennzeichnet, daß der Filterschirm (25) bezüglich des spatialen Modulatorschirms (MS) gegenüber der chromatischen Polarisationsvorrichtung (10) angebracht ist.

10. Anzeigevorrichtung nach Anspruch 1, dadurch gekennzeichnet, daß die Modulationszellen (C1 bis C5) Flüssigkristallzellen sind.

11. Anzeigevorrichtung nach Anspruch 10, dadurch gekennzeichnet, daß der Flüssigkristall aus absorbierenden einaxialen Molekülen besteht und daß jede Zelle (C1 bis C5) eine erste und eine zweite Gruppe (10, 13) von Elektroden enthält, die unabhängig voneinander sind, auf jeder Zelle gegenüberliegenden Flächen (10, 11) angeordnet sind und für senkrechte Polarisationsrichtungen (PS) wirken.

12. Anzeigevorrichtung nach Anspruch 11, dadurch gekennzeichnet, daß jede Gruppe (12, 13) von einer ersten und einer zweiten Elektrodenmatrix (12a, 12b und 13a, 13b) gebildet ist, an die eine erste bzw. eine zweite Polarität (+, -) eines Modulationssignals (SM1, SM2) angelegt wird, wobei die Elektroden der ersten Matrix mit den Elektroden der zweiten Matrix ineinander verschachtelt sind.

13. Anzeigevorrichtung nach Anspruch 12, dadurch gekennzeichnet, daß die Elektroden (12a, 12b) der ersten Gruppe (12) senkrecht zu den Elektroden (13a, 13b) der zweiten Gruppe (13) verlaufen.

14. Anzeigevorrichtung nach Anspruch 10, dadurch gekennzeichnet, daß jede Zelle (C1 bis C5) eine erste und eine zweite Elektrodengruppe (30, 31) enthält, die auf einer ersten Fläche (10) der Zelle angeordnet ist, und auf einer zweiten Fläche (11) eine zu beiden Elektrodengruppen (30, 31) gemeinsam gehörende Elektrode enthält, wobei die Elektroden der ersten Gruppe (30) mit den Elektroden der zweiten Gruppe (31) verschachtelt sind, und daß bei Abwesenheit von an die Elektrodengruppen 30, 31 angelegten Signalen in jeder Zelle (C1 bis Cn) die Moleküle entsprechend einer ersten oder einer zweiten Richtung verlaufen, gemäß der sie gegenüber einer Elektrode der ersten oder der zweiten Gruppe (30, 31) liegen.

15. Anzeigevorrichtung nach Anspruch 14, dadurch gekennzeichnet, daß die ersten und zweiten Ausrichtrichtungen der Moleküle zueinander senkrecht sind.

## Claims

1. Device for the display of colour images comprising a light source (2) producing a beam of white light (PB) known as a primary beam, a spatial modulator (SM) of light comprising an array of n modulation cells (C1 to C5), characterized in that it comprises means (50) for polarizing the light of a first colour in a first direction of polarization and the light of at least one other colour in a second direction of polarization orthogonal to the first, the white light thus polarized being sent to the spatial modulator, the modulator including means (12, 13) for modulating the light received in each cell, the modulation of the light polarized in the first direction (P) being independent of the modulation of the incident light polarized in the second direction (S).

2. Display device according to Claim 1, characterized in that the means for polarizing the light include a chromatic polarizer device (10) interposed in the path of the primary beam (PB) between the light source (2) and the spatial modulator (SM), the chromatic polarizer device (10) delivering a secondary beam (F2) in which, firstly, the wavelengths relating to a first primary colour (green) exist solely with the second direction of polarization (S) and in which, secondly, the wavelengths relating to a second primary colour (Red) and a third primary colour (Blue) exist solely with the first direction of polarization (P).

3. Display device according to Claim 2, characterized in that the chromatic polarizer device (10) includes a first polarizer screen (R1) and a second polarizer screen (R2) positioned one after the other, one of the polarizer screens (R1) eliminating the wavelengths corresponding to the first primary colour (G) and having one of the two orthogonal directions of polarization (S), and the other polarizer screen (R2) eliminating the wavelengths corresponding to the second and third primary colours (R, B) and having the other of the two directions of polarization (S).

4. Display device according to Claim 3, characterized in that the two polarizer screens (R1, R2) include elongated molecules that are absorbent with respect to given wavelengths, oriented along mutually parallel directions in each of the polarizer screens, these directions being perpendicular between the two polarizer screens.

5. Display device according to Claim 2, characterized in that it further includes a filtering screen (25) comprising elementary filters (fl to fn), each corresponding to a given modulation cell (C1 to Cn), each filter being either of a first type (J) letting through wavelengths relating to the second primary colour (Red) or of a second type letting through wavelengths relating to the third primary colour (Blue), the two types of filters further letting through wavelengths relating to the first primary colour (Green).

6. Display device according to one of Claims 2, or 3, or 4, or 5, characterized in that the first primary colour is green and in that the second and third primary colours are red and blue.

7. Display device according to one of Claims 5 or 6, characterized in that the first type of elementary filter is Yellow and in that the second type of elementary filter is CYAN.

8. Display device according to one of Claims 5 or 6 or 7, characterized in that the filtering screen (25) is located between the chromatic polarizer device (10) and the spatial modulator screen (SM).

9. Display device according to any one of Claims 5 or 6 or 7, characterized in that the filtering screen (25) is located opposite the chromatic polarizer device (10) in relation to the spatial modulator screen (SM).

10. Display device according to Claim 1, characterized in that the modulator cells (C1 to C5) are liquid crystal cells.

11. Display device according to Claim 10, characterized in that the liquid crystal is constituted by uniaxial absorbent molecules and in that each cell (C1 to C5) has a first set and a second set (12, 13) of electrodes that are independent of each other, located on opposite faces (10, 11) of each cell, and being active for orthogonal directions of polarization (P, S).

12. Display device according to Claim 11, characterized in that each set (12, 13) is formed by a first array and a second array of electrodes (12a, 12b and 13a, 13b), to which there are respectively applied a first polarity (+) and a second polarity (-) of a modulation signal (MS1, MS2), the electrodes of the first array being interposed with the electrodes of the second array.

13. Display device according to Claim 12, characterized in that the electrodes (12a, 12b) of the first set (12) extend perpendicularly to the electrodes (13a, 13b) of the second set (13).

14. Display device according to Claim 10, characterized in that each cell (C1 to C5) has a first group (30) and a second group (31) of electrodes located on a first face (10) of the cell and has, on a second face (11), an electrode common to the two groups (30, 31) of electrodes, the electrodes of the first group (30) being interposed with the electrodes of the second group (31) and in that when there are no signals applied to the groups (30, 31) of electrodes in each cell (C1 to Cn), the molecules are oriented in a first or in a second direction, depending on whether they are placed so as to be facing an electrode of the first or of the second group (30, 31).

15. Display device according to Claim 14, characterized in that the first and second directions of orientation of the molecules are orthogonal.
